# EUROPÄISCHE PATENTSCHRIFT

(11) **EP 1 206 181 B1**
(45) Veröffentlichungstag und Bekanntmachung des Hinweises auf die Patenterteilung: **12.11.2003**
(21) Anmeldenummer: 00956328.9
(22) Anmeldetag: 28.07.2000
(51) Int. Cl.: A01N 25/24, A01N 25/04

(54) **WIRKSTOFFHALTIGE KOMPOSITION SOWIE DEREN HERSTELLUNG UND VERWENDUNG**
COMPOSITION CONTAINING AN ACTIVE SUBSTANCE, PRODUCTION AND USE THEREOF
COMPOSITION CONTENANT DES PRINCIPES ACTIFS, SA PRODUCTION ET SON UTILISATION

(30) Priorität: 05.08.1999 DE 19936223
(43) Veröffentlichungstag der Anmeldung: 22.05.2002
(73) Patentinhaber: Goldschmidt AG, 45127 Essen (DE)
(72) Erfinder: BRÜGGEMANN, Helmut, D-47447 Moers (DE); KÜSTER, Erich, D-47803 Krefeld (DE)
(86) Internationale Anmeldenummer: EP0007270
(87) Internationale Veröffentlichungsnummer: WO01010212

(56) Entgegenhaltungen:
- EP-A- 0 272 374
- EP-A- 0 420 497
- WO-A-95/17455
- WO-A-98/16103
- CA-A- 1 023 264
- DE-A- 4 313 085
- FR-A- 1 544 172
- US-A- 3 189 430
- US-A- 3 479 176
- DATABASE WPI Section Ch, Week 198932 Derwent Publications Ltd., London, GB; Class A97, AN 1989-230815 XP002154448 & JP 01 165504 A (SUMITOMO CHEM IND KK), 29. Juni 1989 (1989-06-29)

## Beschreibung

Die Erfindung betrifft eine wirkstoffhaltige Komposition enthaltend:
I. eine Wasser-In-Öl-Polymerdispersion bestehend aus einer kontinuierlichen, mit Wasser praktisch nicht mischbaren organischen Phase, darin fein verteilten, wassequelibaren Polymerisaten, die vorzugsweise auch wasserlöslich sind und gegebenenfalls Hilfsstoffen und
II. mindestens eine biologisch aktive am Polymerisat fixierte Substanz als Wirkstoff.

Die vorliegende Erfindung betrifft ferner die Herstellung der wirkstoffhaltigen Komposition und deren Verwendung zum Ausbringen von Wirkstoffen auf oder in Substrate, vorzugsweise in der Landwirtschaft, insbesondere beim Pflanzen- und Obstanbau sowie bei der Pflanzenzucht, bei der Lagerung oder Verarbeitung von Früchten und Feldfrüchten und pflanzlichen Materialien, wie Holz.

Nach dem Ausbringen von Wirkstoffen, beispielsweise Pestiziden, auf die Oberflachen von Pflanzen, Saatgut und Holz, werden diese Stoffe durch Wasser oftmals rasch wieder abgewaschen und können somit am gewünschten Anwendungsort nicht mehr ausreichend wirksam sein und stellen außerdem unter solchen Bedingungen oft eine Gefahr für das Grundwasser dar.

Es hat deshalb nicht an Versuchen gefehlt, dieses Abwaschen zu reduzieren. Dafür wurden in der Vergangenheit Öl-in-Wasser-Dispersionen eingesetzt, deren Wirkungsweise darauf beruht, daß wäßrige Wirkstofflösungen mehr oder weniger stark verdickt werden, so daß der Auswaschprozeß durch den viskosen Zustand dieser Lösungen vermindert wird.

In der DE 36 28 091 A 1 wird eine wäßrige Polymerdispersion beschrieben, die, mit einem Wirkstoff versetzt, auf einen textilen Träger aufgetragen wird. Erst belm bzw. nach dem Auftragen wird das Polymer auf der Faser koaguliert, so daß die Applikation recht aufwendig ist. Einmal auf das textile Gewebe aufgebracht, ist ein weiterer Kontakt des Trägers und des Wirkstoffs mit Wasser nicht vorgesehen. Die Formulierung dient also offensichtlich nicht dazu, das Abwaschen des Wirkstoffs zu vermeiden. Die Verwendung der beschriebenen Formulierung ist somit z.B. für landwirtschaftliche Zwecke ungeeignet.

Die EP 0 201 214 B1 offenbart Polymerisate aus im wesentlichen wasserunlöslichen Monomeren, in denen der Wirkstoff eingekapselt ist. Aufgabe der Verkapselung ist eine verzögerte Wirkstofffreisetzung.

Aus der EP 0 589 838 A1 sind wäßrige Dispersionen bekannt, die ein hydrophobes Pestizid in der organischen Phase enthalten. Mit dieser Formulierung ist es möglich, den wasserunlöslichen Wirkstoff in einer wäßrigen Phase zu verteilen bzw. ein Konzentrat bereit zu stellen, das mit Wasser verdünnt werden kann. Eine solche wäßrige Verdünnung kann dann z.B. auf landwirtschaftliche Flächen ausgebracht werden.

Ähnliche Ziele, wie die zuvor zitierte Patentanmeldung, beschreibt die EP 0 080 516 A1. Auch in dieser Schrift wird gelehrt, den Wirkstoff in einer wäßrigen Polymerdispersion z.B. aus Copolymerisaten aus Styrol und Acrylsäure einzubinden.

Des weiteren werden in der DE 33 04 457 A1 wäßrige Polymerdispersionen in Verbindung mit Wirkstoffen beschrieben, die besonders zum Verstäuben in der Luft geeignet sind.

Die WO 96/06526 beschreibt einen Träger für Pflanzenschutzmittel zum Schutz für Pflanzkartoffeln auf der Basis von Paraffinen, Wachsen, Polydimethylsiloxanen und Emulgatoren sowie wässrigen Polymerdispersionen, die als Haftmittellösung dienen. Die Herstellung des Trägers ist jedoch sehr aufwendig.

Auch für den Holzschutz wurden ähnliche Produkte beschrieben. Beispielhaft sei hier die DE 30 042 48 A1 genannt, in der eine wäßrige Polymerdispersion als Formulierhilfsmittel für Holzschutzmittel, insbesondere für Aldrin, beschrieben wird.

Die EP 0 203 724 B1 offenbart die Herstellung wäßriger Polymerdispersionen mit der Besonderheit spezieller Kern-Hülle Teilchen, wobei Polymerdispersionen mit Wasser als kontinuierliche Phase beschrieben werden.

In der WO 96/00251 sind amphipatische Pfropfcopolymere aus hydrophoben und hydrophilen Monomeren beschrieben. Hierbei handelt es sich immer um mit Wasser verdünnbare Öl-in-Wasser-Dispersionen. Zur Herstellung dieser Formulierungshilfsmittel werden stets hydrophobe Monomere eingesetzt. Die unter Viskositätserhöhung verdickende Wirkung dieser Formulierungen in wässrigem Milieu ist daher nur unbefriedigend.

Während die zuvor zitierten Schriften sich auf Öl-in-Wasser-Dispersionen bzw. Emulsionen beziehen, handelt es sich bei dem folgenden Stand der Technik um die Verwendung von Wasser-in-Öl- Dispersionen, insbesondere für den Agrarbereich.

So wird in der US 4,123,249 ein wasserlösliches Polymerisat in Form einer Wasserin-Öl-Emulsion als Formulierhilfsmittel für Algizide und Herbizide beschrieben, welche die Wirkstofflösung beim Ausbringen verdickt, bei der jedoch kein Polymeres den Wirkstoff umschließt, so daß die Wirkung dieses Formulierhilfsmittels gegen Auswaschen unbefriedigend ist. Optional wird die Verwendung eines anorganischen Vernetzers, wie etwa phytotoxische Aluminiumsalze, beim Ausbringen der Dispersion beschrieben. Die Verwendung phytotoxischer Vernetzer schränkt das Anwendungsspektrum dieser Emulsion jedoch erheblich ein.

Die Patentschrift CA 1,023,264 lehrt die Verwendung von Wasser-in-Öl-Emulsionen solcher Polymerisate als Zusatz von Spritzlösungen für den landwirtschaftlichen Gebrauch. Zweck des Zusatzes dieser Emulsionen ist auch bei diesem Verfahren, die Viskosität der Spritzlösung zu erhöhen. Hierdurch wird erreicht, daß die Spritzoder Sprühlösungen auch bei Wind sicher im Anwendungsgebiet appliziert werden können. Die in der wäßrigen Phase der Emulsion vorhandenen Polymere sind nicht vernetzt. Eine Verlängerung der Wirkungsdauer der ausgebrachten Pestizide kann mit solchen Formulierungen kaum erreicht werden.

Die WO 91/14365 befaßt sich mit der Verwendung von Wasser-in-Öl-Emulsionen wasserlöslicher Polymerisate von Polymeren, die zu wenigstens 50 % aus Acrylamid bestehen zur Verdickung von zu versprühenden Lösungen eines hydrophilen Wirkstoffs, der einer Polymerlösung zugesetzt wird, so daß die beschriebene Verlängerung der Wirkdauer ebenfalls unzureichend ist.

Darüber hinaus ist aus der EP 0 777 414 B1 eine versprühbare, wasserunlösliche Filme bildende Wirkstoffzubereitung zur Anwendung an Pflanzen bekannt.

Die EP 0 481 226 B1 lehrt ein pulverförmiges Absorptionsmaterial, das Wasser und gegebenenfalls Nährstoffe und Arzneimittel an andere Körper, vorzugsweise Pflanzen, abgibt.

Die EP 0 734 206 offenbart lagerstabile, flüssige oder trockene, konzentrierte Zusammensetzungen, die Glyphosat, ein oder mehrere Sekundäralkohol-Tenside und ein oder mehrere andere Tenside enthält. Mit der Zusammensetzung kann die Wirksamkeit oder die Regenbeständigkeit von Pestiziden und Nährstoffen verbessert werden.

In der WO 85/01736 wird eine hygroskopische Beschichtungskomposition für Saatgut beschrieben, die aus fein zerteiltem Polyacrylamid und Polyacrylat und gegebenenfalls einem Haftvermittler besteht. Diese Komposition hat den Nachteil, daß die Handhabung von fein gemahlenem Polyacrylamid bzw. Polyacrylat schwierig ist und die Komposition ohne Haftvermittler am Saatgut schlecht haftet.

Aus der EP 0 887 004 ist ferner ein sehr aufwendiges Verfahren zum Schutz von keimendem Saatgut bekannt, bei dem das Saatgut mit einem Gel überzogen und dann getrocknet wird. In der EP 0 894 425 wird ein Apparat zur Umhüllung eines Saatkorns mit einem Gel beschrieben.

In der Entgegenhaltung DE 43 44 224 A1 werden wasserquellbare, partikelförmige, granuläre Polymere beansprucht, die sich erfindungswesentlich im trockenen Zustand durch eine Dichte von größer 1 g/cm³ und durch eine poröse Struktur auszeichnen. Die poröse Struktur des Polymers wird während der Trocknung der Polymerisate bei Temperaturen von 100 bis 240°C unter Verwendung von stickstoffhaltigen Treibmitteln ausgebildet.

Die Polymerpartikel nach DE 43 44 224 A1 behalten ihre Partikelform auch im gequollenen Zustand bei und haften deshalb schlecht auf geneigten oder bewegten Oberflächen, wie Blättern, Ästen oder Saatgut. Ferner kann mit den Polymerpartikeln gemäß DE 4 344 224 A1 keine gleichmäßige Beschichtung von z. B. Saatgut erreicht werden. Aufgrund dieser Eigenschaften sind sie bezüglich ihrer Anwendung zur dosierten Abgabe von in dem Polymerisat eingeschlossenen Substanzen auf wäßrige Medien, beispielsweise Binnengevtässer, beschränkt

Aufgabe der vorliegenden Erfindung ist es deshalb, eine flüssige, wirkstoffhaltige Formulierung bereit zu stellen, die einfach herzustellen und leicht zu applizieren ist und bei der Leaching-Probleme des Wirkstoffes vermindert werden, die als Saatgutbeize einsetzbar ist, bei der die gegebenenfalls vorhandene Toxizität gegenüber anderen als den Ziel-Organismen bzw. der Umgebung reduziert ist und bei der ein Nachdosieren der Wirkstoffe oder weitere, wiederholte Applikationen entfallen.

Erfindungsgemäß wurde die Aufgabe durch die Bereitstellung einer wirkstoffhaltigen Komposition gelöst, die
I. eine Wasser-in-Öl-Polymerdispersion bestehend aus einer kontinuierlichen, mit Wasser praktisch nicht mischbaren organischen Phase, darin fein verteilten, wasserqueilbaren Polymerisaten, die vorzugsweise auch wasserlöslich sind und gegebenenfalls Hilfsstoffen und
II. mindestens eine biologisch aktive am Polymerisat fixierte Substanz als Wirkstoff
enthält.

Vorzugsweise ist der Wirkstoff am Polymerisat fixiert; d.h. der Wirkstoff ist am Polymerisat adsorbiert, in die Polymermatrix eingebaut und/oder wird vom Polymerisat bei Kontakt der erfindungsgemäßen Komposition mit Wasser oder einer wässrigen Lösung umschlossen.

Überaschenderweise können nahezu alle Wirkstoffe unabhängig davon, ob diese einen eher hydrophilen oder hydtophoben Charakter haben, in einer solchen Polymerdispersion homogen verteilt werden. Die Polymerdispersion bleibt auch nach dem Zusatz des Wirkstoffs stabil.

Die erfindungsgemäße Komposition wird auch direkt in das Bodensubstrat eingearbeitet. Hierdurch werden die in das Bodensubstrat eingebrachten Wirkstoffe länger am gewünschten Ort gehalten, wodurch sich die Aktivität sowie die Wirkdauer des Wirkstoffs signifikant erhöht.

Eine Wasser-in-Öl-Polymerdispersion im Sinne der Erfindung umfaßt sowohl eine Polymeremulsion als auch eine Polymersuspension, wie sie z. B. in Ullmann's Encyclopedia of Industrial Chemistry, 1988, Vol. A11, Seite 254 beschrieben sind, die hiermit als Referenz eingeführt wird und somit als Teil der Offenbarung gilt.

Bei den in der erfindungsgemäßen Komposition enthaltenen inversen Polymerisat-Dispersionen handelt es sich um eine Klasse von Produkten, die vorzugsweise durch Wasser-in-Öl-Polymerisation hergestellt werden. Dabei erzeugt man in einer kontinuierlichen, mit Wasser praktisch nicht mischbaren organischen Phase fein verteilte wasserlösliche und/oder wasserquellbare Polymerisate unter Zusatz von Wasser-in-Öl-Emulgatoren und/oder -Dispergatoren und gegebenenfalls Netzmitteln.

Als hydrophobe, organische Flüssigkeiten werden vorzugsweise aromatische und aliphatische lineare, verzweigte und cyclische Kohlenwasserstoffe eingesetzt. Hierzu zählen Kohlenwasserstoffe oder deren Gemische, vorzugsweise n- und/oder isoParaffine insbesondere auch Destillate aus überwiegend paraffinischen und naphthenbasischen Erdölen. Weiterhin können auch lineare und verzweigte flüssige Ester natürlichen und synthetischen Ursprungs verwendet werden. Darunter fallen die natürlichen Öle, deren Hauptbestandteil in erster Linie Triglyceride mit einem von ein- oder mehrfach ethylenisch ungesättigten sowie von gesättigten C10- bis C30-Fettsäuren abgeleiteten Carbonsäureteil sind, sowie die daraus hergestellten Ester mit aliphatischen Alkoholen. Die genannten Stoffe werden auch in einer bezüglich der Zusammensetzung und Menge beliebigen bzw. unterschiedlichen Kombination untereinander als hydrophobe, organische Phase eingesetzt.

Zur Vorbereitung der Polymerisation erfolgt die Herstellung der monomerenhaltigen Wasser-in-Öl-Dispersion, wobei vorzugsweise öllösliche Emulgatoren mit niedrigem HLB-Wert benutzt, wie Teilester von Glycerin, Di- und Polyglycerin, Sorbit, Sorbitan und Additionsprodukte von Alkylenoxiden, wie Ethylenoxid und Propylenoxid an höhere lineare und verzweigte Alkohole bzw. Alkylphenol, eingesetzt werden. Ebenfalls bevorzugt werden auch die sogenannten polymeren Emulgatoren allein oder im Gemisch verwendet, wie sie unter anderem in US-PS 4 786 681 beschrieben sind, die hiermit als Referenz eingeführt wird und somit als Teil der Offenbarung gilt.

Die Polymerisate werden hergestellt, indem mindestens ein wasserlösliches, monoethylenisch ungesättigtes Monomeres allein oder zusammen mit mehrfach reaktionsfähigen, vorzugsweise mehrfach ethylenisch ungesättigten Monomeren, die als Vernetzer wirken, in der wäßrigen Phase einer Wasser-in-Öl-Polymerdispersion in Gegenwart von Dispergatoren und/oder vorzugsweise Emulgatoren und gegebenenfalls Netzmitteln und üblichen radikalisch wirksamen Polymerisationsinitiatoren polymerisiert wird. Die wasserlöslichen monoethylenisch ungesättigten Monomeren können gegebenenfalls zusammen mit wasserunlös-lichen, monoethylenisch ungesättigten Monomeren wie z. B. Vinylacetat copolymerisiert werden, wobei die wasserunlöslichen Monomeren in aller Regel nur in einer solchen Menge eingesetzt werden, daß noch wasserlösliche bzw. wasser-quellbare Polymerisate entstehen. Solche Polymerisate und die Herstellung von Polymerisaten nach dem inversen Verfahren der Wasser-in-Öl-Polymerisation sind bekannt.

Beispielhaft wasserlösliche, monoethylenisch ungesättigte Verbindungen sind: monoethylenisch ungesättigte Carbonsäuren, wie Acrylsäure, Methacrylsäure, Maleinsäure, Itaconsäure, Salze der genannten Carbonsäuren, z. B. die Natrium-, Kaliumoder Ammoniumsalze, Acrylsäure- und (Meth)Acrylsäureester von Aminoalkoholen, wie beispielsweise Dimethylaminoethylacrylat in protonierter oder quatemisierter Form, z. B. Dimethylaminoethylacrylat-Hydrochlorid, Dimethylaminoethylacrylat-Hydrosulfat, Trimethylammoniummethylacrylat-Chlorid, TrimethylammoniummethylacrylatMethosulfat, Dimethylaminoethylmethacrylat-Hydrochlorid, Dimethylaminoethyl-methacrylat-Hydrosulfat, Trimethylammoniumethylmethacrylat-Chlorid, Dimethylethylammoniummethylmethacrylatethosulfat, Acrylamid, Methacrylamid, N-alkylierte (Meth)Acrylamide, Dialkylaminoalkylacrylamide und Dialkylaminoalkylmethacrylamide und die sauren Salze und die quatemisierte Form der Ammoniumsalze, wie beispielsweise Methacrylamidopropyl-trimethylammoniumchlorid, Acrylamidopropyltrimethylammoniumchlorid, Methacrylamidopropyltrimethylammoniummethyl-sulfat, Acrylamidopropyltrimethylammoniummethylsulfat. Weiterhin Acrylamido- und Methacrylamidoalkylsulfonsäure, wie 2-Acrylamido-2-methylpropansulfonsäure, und ihre Salze, z.B. die Na-, K- oder Ammoniumsalze, Hydroxyalkylacrylate und Hydroxyalkylmethacrylate, Vinylsulfonsäure, Vinylphosphonsäure, N-Vinylamide, wie beispielsweise N-Vinylformamid, N-Vinylacetamid N-Vinyl-N-methylacetamid und NVinyl-N-methylformamid, Diallyldimethylammoniumchlorid, N-Vinylpyrrolidon, N-Vinylimidazol, N-Vinylimidazolin, 2-Methyl-1-vinylmidazolin, 2-Sulfoethylmethacrylat, Styrolphosphonsäure und Styrolsulfonsäure.

Geeignete wasserlösliche Monomere sind außerdem N-Methylolacrylamid, N-Methylolmethacrylamid sowie die mit einwertigen C1 bis C4-Alkoholen partiell oder vollständig veretherten N-Methylol(meth)acrylamide. Die wasserlöslichen Monomeren können entweder allein oder in Mischung untereinander zu wasserlöslichen Polymerisaten polymerisiert werden. Sie werden in beliebigem Verhältnis miteinander copolymerisiert.

Wasserquellbare Polymerisate werden dadurch erhalten, daß mindestens ein wasserlösliches, monoethylenisch ungesättigtes Monomeres zusammen mit mindestens einem Vernetzer polymerisiert werden. Die hierbei eingesetzten Mengen des Vernetzers sind von der Art des Vemetzers abhängig und liegen in dem Bereich von 0,001 bis zu 10 Gew.-%, bezogen auf die Menge der eingesetzten Monomeren. Vorzugsweise betragen die Mengen an Vernetzer 0,01 bis 1 Gew.-%. Die Vemetzer enthalten beispielsweise mindestens zwei nicht konjugierte, ethylenisch ungesättigte Doppelbindungen. Geeignete Vemetzer sind beispielsweise N, N'-Methylenbisacrylamid, Ethylenglykoldiacrylat und -methacrylat, Polyethylenglykoldiacrylate und -dimethacrylate, Propylenglykoldiacrylat, Butandioldiacrylat, Hexandioldiacrylat und -dimethacrylat, Diacrylate und Dimethacrylate von Blockcopolymerisaten aus Alkylenoxiden, wie Ethylenoxid und Propylenoxid, zweifach bzw. dreifach mit Acrylsäure oder Methacrylsäure veresterte An- lagerungsprodukte von Ethylenoxid und/oder Propylenoxid an Glycerin, Pentaerythrit bzw. Trimethylolpropan, mindestens zweifach mit Acrylsäure oder Methacrylsäure veresterte mehrwertige Alkohole, wie Glycerin oder Pentaerythrit bzw. Trimethylolpropan, mindestens zweifach mit Allylgruppen veretherte mehrwertige Alkohole, wie Glycerin oder Pentaerythrit bzw. Trimethylolpropan oder deren An- lagerungsprodukte von Ethylenoxid und/oder Propylenoxid, Tetraallylethylendiamin, Divinylbenzol, Diallylphthalat, Polyethylenglykoldivinylether, Butandioldvinylether, Divinylethylenharnstoff, Triallylamin bzw. seine quatemierten Derivate z. B. Triallylmethylammoniumchlorid und Tetraallylammoniumchlorid. Vorzugsweise werden wasserlösliche Vernetzer, z.B. N,N'-Methylen-bisacrylamid, Polyethylenglykoldiacrylate bzw. -dimethacrylate und/oder Triallylmethylammoniumchlorid eingesetzt.

Die in den Wasser-in-Öl-Polymerdispersionen enthaltenen Partikel besitzen vorzugsweise eine Partikelgröße im Bereich von 0,1 bis 10 µm. Die Dispersionen sind wegen ihrer niedrigen Viskosität als Flüssigkeiten zu verwenden.

Die Viskosität solcher Komposition kann zusätzlich durch Veränderung des W/O-Verhältnisses in einem großen Bereich variiert und damit dem Ersatzzweck angepaßt werden.

Die Wasser-in-Öl-Polymerisatdispersionen bilden überraschenderweise nach Kontakt mit Wasser einen homogenen, hochviskosen Film aus, der an jegliche Art von Oberflächen, insbesondere an geneigten und bewegten Oberflächen ein gegenüber gequollenen Pulvern verbessertes Haftvermögen aufweist.

Die erfindungsgemäße Komposition selbst wird beispielsweise als Sprühflüssigkeit eingesetzt und auf die Substrate aufgebracht bzw. mit Materialien vermischt. Der Wirkstoff wird dabei auf beliebigen Flächen wie z.B. Torf, Mulch, Steinwolle, auf gequollenen wässrigen Gelen, vorzugsweise von Superabsorbern, auf natürlichen und/oder synthetischen Fasergemischen, Geweben, Fliesen oder Watte, auf Pflanzenteilen wie Baumstämme, Äste, Blüten und Blätter, ganzen oder geteilten Wurzeln oder Knollen sowie auf Oberflächen von Saatgutkörnern und Samen, vorzugsweise gleichmäßig verteilt und ggf. eingearbeitet.

Die erfindungsgemäße Komposition eignet sich zum Einsatz gegen verschiedenste für Pflanzen oder Pflanzenteile schädliche Organismen, wie z.B. Bakterien, Viren, Milben, Blattläuse, Insekten, Insektenlarven, Schnecken, Nematoden, Nagetiere bzw. zu deren Prävention.
Entsprechend enthält die erfindungsgemäße Komposition als Wirkstoffe biologisch aktive Substanzen, vorzugsweise als biozide Wirksubstanzen folgende Stoffe: Akarizide, Algizide, Aphizide, Bakterizide, Fungizide, Herbizide, Insektizide, Larvizide, Molluskizide, Nematizide, Rodentizide, Virizide. Ebenfalls bevorzugt sind jedoch auch Wirksubstanzen, wie Hemmstoffe für Pflanzen, z. B. gegen Algen, Pilze, Gräser und sogenannte Unkrautpflanzen sowie Wuchsstoffe, wie Düngemittel und pflanzliche Wuchsstoffe, Pflanzenwachstums-Regulatoren, Reppelents, sowie Mittel, welche die Resistenz von Pflanzen gegenüber schädlichen Organismen oder Stoffen steigern können.

Bezüglich der Art der Wirksubstanzen gibt es bei den erfindungsgemäßen Kompositionen prinzipiell keine Einschränkungen. Beispielhaft für die Gruppe der Insektizide seien genannt: Organophosphate, Pyrethroide, Pyrethrum, Carbamate, chlorierte Kohlenwasserstoffe, Benzoylharnstoffderivate sowie durch Biosynthesen gewonnene Substanzen, wie etwa BT - Typen, BS und ähnliche, verwandte Typen; beispielhaft für die Gruppe der Herbizide seien genannt: Triazine, Amide, Carbamate, Harnstoffderivate, Diazine, Diphenylether, Sulfonylhamstoffe und Imidazolderivate; für die Gruppe der Fungizide seien beispielhaft genannt: Benzimidazole, Triazole, Organophosphate, Morpholine und Dithiocarbamate.

Neben den erwähnten Verbindungen kommen auch Duftstoffe als Wirkstoff in Betracht. Hierbei kommt den Pheromonen eine besondere Bedeutung zu. Auch gängige Pheromone und andere Geruchsstoffe können, bei chemischer Verträglichkeit der Komponenten, Bestandteil der erfindungsgemäßen Komposition sein.

Beide Phasen der Wasser-in-Öl-Polymerdispersion eignen sich als Träger oder Solvenz für einen Wirkstoff. Allgemein läßt sich sagen, daß hydrophile Wirksubstanzen vollständig oder überwiegend in der wäßrigen Polymerphase der Wasser-in-ÖlPolymerdispersion enthalten sind, hydrophobe Substanzen hingegen sind vollständig oder überwiegend in der Ölphase der Wasser-in-Öl-Polymerdispersion enthalten.

Hydrophobe Wirkstoffe, wie beispielsweise Isopropyl(E, E)- 11 -methoxy-3, 7,11 -trimethyl-2 ,4-dodecandienoat (Methopren®) können auch die Ölphase teilweise oder völlig ersetzen. In einem solchen Fall ist vorzugsweise die Ölphase der Wasser-in-Öl-Polymerdispersion und der Wirkstoff identisch.

Grundsätzlich sind sowohl hydrophile sowie überwiegend hydrophile als auch hydrophobe sowie überwiegend hydrophobe Substanzen als Wirkstoff in der erfindungsgemäßen Komposition geeignet. Teilweise ist es jedoch erforderlich, die Art der Emulgatoren, des Polymers und/oder die Beschaffenheit der Ölphase an den zu formulierenden Wirkstoff anzupassen.

Die erfindungsgemäße Komposition kann mehrere Wirkstoffe enthalten. Dabei können sich die jeweiligen Wirkstoffe in einer oder in beiden Phasen der Wasser-in-Öl-Polymerdispersion befinden.

Es ist auch möglich, daß die Wirkstoffe Addukte mit dem Polymer oder einem anderen Bestandteil der Polymerdispersion bilden. Ein solcher Effekt ist gewünscht, soweit die Bildung der Addukte nicht in irreversibler Weise erfolgt.

Hydrophobe Wirkstoffe können, wie beschrieben, die Ölphase der Polymerdispersion bilden. Der Mengenanteil der hydrophoben Wirkstoffe kann daher maximal 100 Gew.-% der Ölphase betragen. Bevorzugt sind jedoch solche wirkstoffhaltigen Kompositionen, in denen der Wirkstoffanteil maximal 50 Gew.-%, besonders bevorzugt maximal 25 Gew.-% der Ölphase beträgt.

Hydrophile Wirkstoffe lösen sich bevorzugt in der Wasserphase bzw. sind darin eingebunden. Der hydrophile Wirkstoffanteil kann maximal 60 Gew.-%, vorzugsweise maximal 40 Gew.-%, besonders bevorzugt maximal 25 Gew.-% der wäßrigen Phase betragen.

Die Viskosität der Polymerdispersion kann in weiten Bereichen variabel eingestellt werden und somit dem jeweiligen Anwendungszweck angepaßt werden.

Die Herstellung der erfindungsgemäßen Formulierung erfolgt nach 3 möglichen Verfahrensweisen:
1) Der Wirkstoff wird vor der Polymerisation der Monomerlösung oder der Ölphase zugesetzt, wobei die Ölphase selbst auch der Wirkstoff sein kann. Voraussetzung für diese Methode ist, daß der Wirkstoff während der Polymerisation nicht in unerwünschter Weise, beispielsweise unter Abbruch der Polymerisation, reagiert;
2) Der Wirkstoff wird während der Polymerisation, optional mit anderen Agentien, in die Formulierung als Gesamtmenge oder als Teilmenge oder unter kontinuierlicher Dosierung eingebracht. Voraussetzung ist hier ebenfalls, daß der Wirkstoff nicht in unerwünschter Weise reagiert.
3) Der Wirkstoff wird nach der Polymerisation der Polymerdispersion zugesetzt. Insbesondere bei hydrophilen Wirkstoffen oder beim Eintragen von wäßrigen Lösungen oder Wirkstoffdispersionen wird dabei für eine gute Durchmischung der Komponenten gesorgt, da anderenfalls partielle Überkonzentrationen zum Brechen der Polymerdispersion und anschließend zu deren Vergelung führt.

Die Herstellung der Wirkstofformulierung erfolgt bei Temperaturen im Bereich zwischen 0 und 110C°, vorzugsweise zwischen 20 und 80°C.

Die erfindungsgemäßen Kompositionen finden überall dort Anwendung, wo Wirkstoffe durch biotische und abiotische Umweltfaktoren Einbußen in ihrer Wirksamkeit erleiden. Insbesondere werden sie verwendet, wo bisher Einbußen erfolgten durch klimatische Faktoren, wie Wärme, Kälte, Licht, Wind, Feuchtigkeit oder Niederschläge, sowie durch chemische Faktoren, wie beispielsweise Schädigungen des Wirkstoffs durch Sauerstoff, durch Kohlendioxid, durch Spurengase und durch Pflanzen-Nährstoffe, sowie durch mechanische Faktoren, wie eine ungewünschte Verteilung des Wirkstoffs durch Luft- und Wasserströmungen, wie Wind- und Wellenschlag, oder durch eine unkontrollierte Sedimentation. Aber auch Einbußen durch orographische Faktoren, wie ungünstige Verteilungen aufgrund von Oberflächenstrukturen der zu behandelnden Substrate, Materialien und Flächen und deren Lage, wie beispielsweise Hangneigungen im Gelände oder eine sonstige Delokalisierung des Wirkstoffs und unerwünschte Verteilungen des Wirkstoffs durch edaphische Faktoren, der physikalischen und chemischen Beschaffenheit des Bodens, werden durch die Anwendung der erfindungsgemäßen wirkstoffhaltige Komposition beseitigt oder zumindest vermindert.

Die erfindungsgemäßen wirkstoffhaltigen Kompositionen sind leicht handhabbar und lagerstabil, wobei die Stabilität insbesondere hinsichtlich der Wirksamkeit des Wirkstoffes von Bedeutung ist. Die Kompositionen werden direkt als solche oder zunächst als Wirkstoffkonzentrat gehandhabt und anschließend in verdünnter Form verwendet.

Die Verdünnung kann durch Zusätze von hydrophoben Flüssigkeiten erfolgen, die auch als hydrophobe Phase der Polymerdispersion geeignet sind, z. B. mit flüssigen aliphatischen n- und/oder iso-paraffinischen Kohlenwasserstoffen, die unter dem Sammelbegriff Weißöle zusammengefaßt werden.

Die Verdünnung kann auch erfolgen, indem die erfindungsgemäße Komposition in Wasser eingetragen, gelöst, teilweise gelöst oder dispergiert wird.

Vorteile solcher Formulierungen sind, z. B. eine bessere Lagerstabilität, eine Erhöhung der Viskosität der Anwendungslösung und die Stabilisierung des Wirkstoffs nach dem Ausbringen auf oder in das Substrat. Weiterhin sind geruchsintensive Stoffe dann auch so im Konzentrat eingebunden, daß die Geruchsbelästigung durch den Wirkstoff erheblich vermindert wird.

Typische Anwendungskonzentrationen liegen im Bereich von 0,1 bis 10,0 Gew.%, vorzugsweise von 0,5 bis 5 Gew.% der Komposition, bezogen auf die jeweils verwendete Komposition bzw. auf den jeweils verwendeten Wirkstoff.

Daneben können die erfindungsgemäßen Kompositionen auch in konzentrierter Form in das wässrige Medium eingebracht werden, wobei nach der Phasenumkehr ein kompaktes Gel gebildet wird. Der Wirkstoff wird dann aus der kompakten Gelmasse über einen längeren Zeitraum freigesetzt.

Der Wirkstoff wird bei der erfindungsgemäßen Verwendung der Kompositionen nach Zutritt von Wasser aus den Gelpartikeln sukzessiv freigesetzt, wobei eine zeitliche und mengenmäßige kontrollierte Abgabe des Wirkstoffs (Controlled release effect) an die Umgebung, d.h. eine verzögerte oder beschleunigte Wirkstoffabgabe erreicht wird, die durch die Zusammensetzung der Komposition beeinflußt bzw. gesteuert wird.

Die erfindungsgemäßen Kompositionen und die daraus hergestellten Verdünnungen werden auf oder in Substrate, vorzugsweise durch Aufstreichen, Tauchen oderAufsprühen aufgebracht oder mit dem zu behandelnden Substrat vermischt.

Beim Aufbringen der erfindungsgemäßen Kompositionen auf Pflanzen, beispielsweise bei der Behandlung von Weinreben auf Hanglagen, wird das vorzeitige Abwaschen der Wirkstoffe, der sogenannten Run off-Effekt, deutlich vermindert, d. h. der mit der erfindungsgemäßen Zusammensetzung aufgebrachte Wirkstoff wird bei Regenfällen nicht so rasch abgewaschen und gelangt nur in deutlich vermindertem Maße in die Fließgewässer der Umgebung.

In ähnlicher Weise bleibt bei der Anwendung der erfindungsgemäßen Kompositionen im Erdboden oder in Bodensubstraten der Wirkstoff stabil gelagert und verbessert in den oberen Bodenschichten verfügbar, da hierbei nach Regenfällen der Wirkstoff ebenfalls nicht oder in deutlich verringertem Maße ausgewaschen oder aus dem Boden ausgelaugt wird, so daß der sogenannte Leaching Effekt, bei dem der Wirkstoff in tiefere Bodenschichten und in das Grundwasser eingebracht wird, vermindert wird bzw. unterbleibt.

Bevorzugte Anwendungen der erfindungsgemäßen wirkstoffhaltigen Komposition sind außerdem:

Der Einsatz der erfindungsgemäßen wirkstoffhaltigen Komposition als Saatgutbeize. Die Kompositionen sind in überraschender Weise besonders für diese spezielle Anwendung geeignet, die beispielsweise mit Fungiziden als Wirkstoff, eine günstige und anhaftende Verteilung des im feinteiligen Polymerisat gebundenen Wirkstoffs auf den einzelnen Saatgut- oder Samenkörnern gestattet. Bei Feuchtigkeits- oder Wasserzutritt erfolgt spontan die Ausbildung des wirkstoffhaltigen wässrigen Gels auf den Saatgutkörnern.

Der Einsatz der erfindungsgemäßen wirkstoffhaltigen Komposition zur Bekämpfung von Insekten. Die Komposition wird hierbei in Brutstätten für Insekten ausgebracht und lagert dort als stabile Zubereitung bis durch Feuchtigkeits- oder Wasserzutritt die spontane Ausbildung des Gels erfolgt, aus dem der Wirkstoff, z. B. eine Insektizidund/oder Larvizidformulierung, kontrolliert freigesetzt wird.
Vorzugsweise erfolgt so die Behandlung der Brutstätten von Stechmücken. Besondere Anwendungen sind die Applikationen der erfindungsgemäßen Kompositionen in Kondenswasserbecken von Klimaanlagen und auf Autoreifen, speziell auf Altreifen, durch Aufsprühen oder Aufstreichen der Dispersion. In diesen Fällen wird dann nach Wasserzutritt in Form von Kondens- oder Regenwasser das Insektizid wirksam.

Im Folgenden werden einige Beispiele der erfindungsgemäßen wirkstoffhaltigen Komposition aufgeführt, die den Erfindungsgedanken demonstrieren sollen, diesen jedoch nicht einschränken.

Dabei werden foldende Abkürzungen verwendet:
- ABAH: Azo-bis-amidinopropan-dihydrochlorid
- AMPS: 2-Acrylamido-2-methylpropansulfonsäure
- TAMAC: Triallylmethylammoniumchlorid

### Beispiel 1:

Bei diesem Beispiel wird der Wirkstoff der fertigen Wasser-in-Öl-Polymerdispersion zugegeben.

Zur Herstellung der Polymerdispersion wird zunächst eine wässrige Monomerenlösung aus den folgenden Komponenten hergestellt:

| | |
|---|---|
| 430 g | Wasser |
| 88 g | AMPS, Natriumsalz, 50%ige Lösung |
| 227 g | Acrylamid, 50%ige Lösung |
| 332 g | Acrylsäure |
| 332 g | Natronlauge, 50%ige Lösung |
| 0,6 mL | Thioglykolsäure |
| 1,0 mL | Versenex® 80 |
| 5,0 mL | TAMAC |
| 0,6 g | ABAH |

Danach löst man 40 g Arlacel® 987 in 480 g Shellsol® D 100 und fügt unter Rühren die wäßrige Monomerlösung zu. Nach Ausbildung der Wasser-in-Öl-Polymerdispersion homogenisiert man diese mit einem schnellaufenden Haushaltsmixer und befreit die Wasser-in-Öl-Polymerdispersion durch Ausblasen mit Stickstoff von gelö-stem Sauerstoff. Man katalysiert die Polymerisation bei 20°C mit 2 mL einer 0,2- %igen tert.-Butylhydroperoxidlösung und 2,4 mL Schwefeldioxidgas, wobei der Ansatz durch die entstehende Polymerisationswärme bis auf etwa 100°C aufgewärmt wird. Nach dem Abkühlen rührt man 40 g Nonylphenol-6-ethoxylat und 20 g Nonylphenol-9-ethoxylat ein.

Das Polymerisat besteht aus 25 Mol-% Acrylamid, 72 Mol-% einer teilneutralisierten Acrylsäure und 3 Mol-% AMPS.

Die fertige Wasser-in-Öl-Polymerdispersion versetzt man einmal mit 2 % Bronopol®, einem Bakteriostatikum (2-Brom-2-nitropropan-1 ,3-diol), sowie einmal mit 5 % Bronopol® und rührt jeweils 2 bis 5 Stunden bis zur völligen Auflösung der Kristalle. Beim Einbringen der wirkstoffhaltigen Komposition in Wasser erhält man je nach Konzentration mehr oder weniger viskose Lösungen.

### Beispiel 1a:

Bei diesem Beispiel wird der Wirkstoff der fertigen Wasser-in-Öl-Polymerdispersion zugegeben.

Zur Herstellung der Polymerdispersion wird zunächst eine wässrige Monomerenlsöung aus den folgenden Komponenten hergestellt:

| | |
|---|---|
| 448 g | Wasser |
| 84 g | AMPS, Natriumsalz, 50 %ige Lösung |
| 220 g | Acrylamid, 50 %ige Lösung |
| 320 g | Acrylsäure |
| 320 g | Natronlauge, 50 %ige Lösung |
| 2,5 mL | Ameisensäure |
| 1,0 mL | Versenex® 80 |
| 5,0 mL | TAMAC |
| 0,6 g | ABAH |

Danach löst man 30 g Hypermer® 1083 in 460 g Solvesso® 150 (aromatenhaltiges Lösungsmittel der Exxon Chemical) und fügt unter Rühren die wässrige Monomerlösung zu. Nach Ausbildung der Wasser-in-Öl-Polymerdispersion homogenisiert man diese mit einem schnellaufenden Haushaltsmixer und befreit die Wasser-in-Öl-Polymerdispersion durch Ausblasen mit Stickstoff von gelöstem Sauerstoff. Man katalysiert bei 20°C mit 2 mL einer 0,2 %igen tert.-Butylhydroperoxidlösung und 2,4 mL Schwefeldioxidgas, wobei der Ansatz durch die entstehende Polymerisationswärme bis auf etwa 100°C aufgewärmt wird.

Das Polymerisat besteht aus 25 Mol-% Acrylamid, 72 Mol-% einer teilneutralisierten Acrylsäure und 3 Mol-% AMPS.

Die fertige Wasser-in-Öl-Polymerdispersion versetzt man beispielsweise mit dem Wirkstoff Bronopol®.

### Beispiel 1b:

Bei diesem Beispiel wird der Wirkstoff der fertigen Wasser-in-Öl-Polymerdispersion zugegeben.

Die wässrige Monomerenlösung wird wie im vorigen Beispiel 1a hergestellt.

Danach löst man 30 g Hypermer® 1083 in einer Mischung von 180 g Edenor® MESU (Ölsäuremethylester der Henkel KG) und 280 g Solvesso® 150 und fügt unter Rühren die wässrige Monomerlösung zu. Nach Ausbildung der Wasser-in-Öl-Polymerdispersion homogenisiert man diese mit einem schnellaufenden Haushaltsmixer und befreit die Wasser-in-ÖI-Polymerdispersion durch Ausblasen mit Stickstoff von gelöstem Sauerstoff. Man katalysiert bei 20°C mit 2 mL einer 0,2 %igen tert.-Butylhydroperoxidlösung und 2,4 mL Schwefeldioxidgas, wobei der Ansatz durch die entstehende Polymerisationswärme bis auf etwa 100°C aufgewärmt wird.

Das Polymerisat besteht aus 25 Mol-% Acrylamid, 72 Mol-% einer teilneutralisierten Acrylsäure und 3 Mol-% AMPS.

Die fertige Wasser-in-Öl-Polymerdispersion versetzt man beispielsweise mit dem Wirkstoff Bronopol®.

### Beispiel 2:

Bei diesem Beispiel erfolgt der Zusatz des Wirkstoffes, Methopren® = Isopropyl(E,E)-11 -methoxy-3 ,7,11 -trimethyl-2 ,4-dodecandienoat, bereits vor der eigentlichen Polymerisation.

Zur Herstellung der Polymerdispersion wird zunächst eine wässrige Monomerenlösung aus den folgenden Komponenten hergestellt:

| | |
|---|---|
| 490 g | Wasser |
| 234 g | Acrylamid, 50%ige Lösung |
| 358 g | Acrylsäure |
| 358 g | Natronlauge, 50 %ige Lösung |
| 0,6 mL | Thioglykolsäure |
| 1,0 | mLVersenex® 80 |
| 5,0 mL | TAMAC |
| 0,3 g | ABAH |
| 0,4 g | VA-044 |

Danach löst man 30 g Hypermer® 2296 in 416 g Shellsol® D 100 und 100 g Methopren® und fügt unter Rühren die wäßrige Monomerenlösung zu. Nach Ausbildung der Wasser-in-Öl-Polymerdispersion homogenisiert man diese mit einem schnellaufenden Haushaltsmixer und befreit die Polymerdispersion durch Ausblasen mit Stickstoff von gelöstem Sauerstoff. Man katalysiert die Polymerisation bei 20°C mit 2 mL einer 0,2 %igen tert.-Butylhydroperoxidlösung und 3 mL Schwefeldioxidgas, wobei der Ansatz durch die entstehende Polymerisationswärme bis auf etwa 100°C aufgewärmt wird.

Vor dem Einbringen in Wasser rührt man in die fertige Polymerdispersion noch 3 % Nonylphenol-6-ethoxylat ein.

Das Polymerisat besteht aus 25 Mol-% Acrylamid und 75 Mol-% einer teilneutrlisierten Acrylsäure.

### Beispiel 3:

Bei diesem Beispiel erfolgt der Zusatz des Wirkstoffes, Pyrethrum, ein Extrakt aus Chrysanthemum-Arten, gelöst in nicht näher spezifizierten Kohlenwasserstoffen (Lieferant: Kenya Pyrethrum), bereits vor der eigentlichen Polymerisation. Der Wirkstoff ist in Wasser weitgehend unlöslich und wird deshalb als Teil der öligen Phase der Wasser-in-Öl-Polymerdispersion eingesetzt.

Die Herstellung der Monomerenlösung entspricht dem Vorgehen gemäß Beispiel 2.

Danach löst man 30 g Hypermer® 2296 in 416 g Shellsol® D 100 und 100 g Pyrethrum und fügt unter Rühren die wässrige Monomerenlösung zu. Nach Ausbildung der Polymerdispersion homogenisiert man diese mit einem schnellaufenden Haushaltsmixer und befreit die Polymerdispersion durch Ausblasen mit Stickstoff von gelöstem Sauerstoff. Man katalysiert bei 20°C mit 2 mL einer 0,2 %igen tert.-Butylhydroperoxidlösung und 3 mL Schwefeldioxidgas, wobei der Ansatz durch die entstehende Polymerisationswärme bis auf etwa 100°C aufgewärmt wird.

Vor dem Einbringen in Wasser rührt man in die fertige Polymerdispersion noch 3 % Nonylphenol-6-ethoxylat ein.

### Beispiel 4:

Bei diesem Beispiel erfolgt der Zusatz des Wirkstoffes, Methopren® = Isopropyl(E,E)-11-methoxy-3,7,11-trimethyl-2,4-dodecandienoat, bereits vor der eigentlichen Polymerisation. Der Wirkstoff ist in Wasser weitgehend unlöslich und wird deshalb als Teil der öligen Phase der Wasser-in-Öl-Polymerdispersion eingesetzt.

Zur Herstellung der Polymerdispersion wird zunächst eine wässrige Monomerenlösung aus den folgenden Komponenten hergestellt:

| | |
|---|---|
| 350 g | Wasser |
| 226 g | Acrylamid, 50 %ige Lösung |
| 344 g | Acrylsäure |
| 535 g | Kalilauge, 45 %ige Lösung |
| 0,6 mL | Thioglykolsäure |
| 1,0 mL | Versenex® 80 |
| 5,0 mL | TAMAC |
| 0,3 g | ABAH |
| 0,4 g | VA-044 |

Danach löst man 30 g Hypermer® 2296 in 500 g Shellsol® D 100 und 100 g Methopren® und fügt unter Rühren die wäßrige Lösung zu. Nach Ausbildung der Polymerdispersion homogenisiert man diese mit einem schnellaufenden Haushaltsmixer und befreit die Polymerdispersion durch Ausblasen mit Stickstoff von gelöstem Sauerstoff. Man katalysiert die Polymerisation bei 20°C mit 2 mL einer 0,2 %igen tert.-Butylhydroperoxidlösung und 3 mL Schwefeldioxidgas, wobei der Ansatz durch die entstehende Polymerisationswärme bis auf etwa 100°C aufgewärmt wird.

Vor dem Einbringen in Wasser rührt man in die fertige Polymerdispersion noch 3 % Nonylphenol-6-ethoxylat ein.

Das Polymerisat besteht aus 25 Mol-% Acrylamid und 75 Mol-% einer teilneutrlisierten Acrylsäure (Kaliumsalz).

### Beispiel 5:

Bei diesem Beispiel erfolgt der Zusatz des Wirkstoffes, Methopren® =Isopropyl(E,E)-11-methoxy-3,7,11-trimethyl-2,4-dodecandienoat, bereits vor der eigentlichen Polymerisation. Der Wirkstoff bildet ausschließlich die Öl-Phase der Wasser-in-Öl-Polymerdispersion.

Zur Herstellung der Polymerdispersion wird zunächst eine wässrige Monomerenlösung aus den folgenden Komponenten hergestellt:

| | |
|---|---|
| 490 g | Wasser |
| 234 g | Acrylamid, 50 %ige Lösung |
| 358 g | Acrylsäure |
| 358 g | Natronlauge, 50 %ige Lösung |
| 0,6 | mL Thioglykolsäure |
| 1,0 | mL Versenex® 80 |
| 5,0 | mL TAMAC |
| 0,3 g | ABAH |
| 0,4 | g VA-044 |

Danach löst man 30 g Hypermer® 2296 in 516 g Methopren® und fügt unter Rühren die wäßrige Monomerenlösung zu. Nach Ausbildung der Wasser-in-Öl-Polymerdispersion homogenisiert man diese mit einem schnellaufenden Haushaltsmixer und befreit die Polymerdispersion durch Ausblasen mit Stickstoff von gelöstem Sauerstoff. Man katalysiert die Polymerisation bei 20°C mit 2 mL einer 0,2 %igen tert.-Butylhydroperoxidlösung und 3 mL Schwefeldioxidgas, wobei der Ansatz durch die entstehende Polymerisationswärme bis auf etwa 100°C aufgewärmt wird.

Vor dem Einbringen in Wasser rührt man in die fertige Polymerdispersion noch 3 % Nonylphenol-6-ethoxylat ein.

Das Polymerisat besteht aus 25 Mol-% Acrylamid und 75 Mol-% einer teilneutrlisierten Acrylsäure.

### Beispiel 6:

Bei diesem Beispiel erfolgt der Zusatz des Wirkstoffes, Pyrethrum®, bereits vor der eigentlichen Polymerisation. Der Wirkstoff ist in Wasser weitgehend unlöslich und wird deshalb als Teil der öligen Phase der Wasser-in-Öl-Polymerdispersion eingesetzt.

Zur Herstellung der Polymerdispersion wird zunächst eine wässrige Monomerenlösung aus den folgenden Komponenten hergestellt:

| | |
|---|---|
| 350 g | Wasser |
| 226 g | Acrylamid, 50 %ige Lösung |
| 344 g | Acrylsäure |
| 535 g | Kalilauge, 45 %ige Lösung |
| 0,6 mL | Thioglykolsäure |
| 1,0 mL | Versenex® 80 |
| 5,0 mL | TAMAC |
| 0,3 g | ABAH |
| 0,4 g | VA-044 |

Man löst 30 g Hypermer® 2296 in 500 g Shellsol® D 100 und 100 g Pyrethrum® und fügt danach unter Rühren die wäßrige Lösung zu. Nach Ausbildung der Polymerdispersion homogenisiert man mit einem schnellaufenden Haushaltsmixer und befreit die Polymerdispersion durch Ausblasen mit Stickstoff von gelöstem Sauerstoff. Man katalysiert bei 20°C mit 2 mL einer 0,2 %igen tert.-Butylhydroperoxidlösung und 3 mL Schwefeldioxidgas, wobei der Ansatz durch die entstehende Polymerisationswärme bis auf etwa 100°C aufgewärmt wird.

Vor dem Einbringen in Wasser rührt man in die fertige Polymerdispersion noch 3 % Nonylphenol-6-ethoxylat ein.

Das Polymerisat besteht aus 25 Mol-% Acrylamid und 75 Mol-% einer teilneutrlisierten Acrylsäure (Kaliumsalz).

### Beispiel 7:

Bei diesem Beispiel erfolgt der Zusatz des Wirkstoffes, Aquathol® K Dikaliumsalz der 7-Oxa[2.2.1]heptan-2,3-dicarbonsäure
50 % in Wasser, bereits vor der eigentlichen Polymerisation. Der Wirkstoff ist in Wasser löslich und wird deshalb als Teil der wäßrigen Monomerenlösung eingesetzt.

Zur Herstellung der Polymerdispersion wird zunächst eine wässrige Monomerenlösung aus den folgenden Komponenten hergestellt:

| | |
|---|---|
| 250 g 4 | Wasser |
| 226 g | Acrylamid, 50 %ige Lösung |
| 100 g | Aquathol® K |
| 344 g | Acrylsäure |
| 535 g | Kalilauge, 45 %ige Lösung |
| 0,6 mL | Thioglykolsäure |
| 1,0 mL | Versenex® 80 |
| 5,0 mL | TAMAC |
| 0,3 g | ABAH |
| 0,4 g | VA-044 |

Man löst 30 g Hypermer® 2296 in 500 g Shellsol® D 100 und fügt unter Rühren die wäßrige Lösung zu. Nach Ausbildung der Polymerdispersion homogenisiert man diese mit einem schnellaufenden Haushaltsmixer und befreit die Polymerdispersion durch Ausblasen mit Stickstoff von gelöstem Sauerstoff. Man katalysiert bei 20°C mit 2 mL einer 0,2 %igen tert.-Butylhydroperoxidlösung und 3 mL Schwefeldioxidgas, wobei der Ansatz durch die entstehende Polymerisationswärme bis auf etwa 100°C aufgewärmt wird.

Vor dem Einbringen in Wasser rührt man in die fertige Polymerdispersion noch 3 % Nonylphenol-6-ethoxylat ein.

Das Polymerisat besteht aus 25 Mol-% Acrylamid und 75 Mol-% einer teilneutralisierten Acrylsäure (Kaliumsalz).

### Beispiel 8:

50 g eines Polymerisats gemäß Beispiel 1 (ohne Zusatz eines Wirkstoffs) werden mit 0,1 g 3,7-Bis(dimethylamino)phenothiaziniumchlorid gemischt. Dazu wird das Polymerisat in einem Becherglas vorgelegt und der Wirkstoff unter stetigem Rühren zugesetzt.

0,2 g der Formulierung werden auf eine um 45° geneigte Glasplatte gegeben. Über die Formulierung wird Wasser (dest.) mit einer Geschwindigkeit von 1 ml/min. gegeben.

Durch die blaue Färbung zeigt sich, daß auch nach 2 Stunden noch Wirkstofffreigesetzt wird.

Im Parallelexperiment wird der Wirkstoff selbst auf die Glasplatte aufgebracht. Bereits nach wenigen Minuten ist der gesamte Wirkstoff abgewaschen.

Das Beispiel zeigt, daß die Formulierung den "Run off" deutlich vermindert.

### Beispiel 9:

Eine Formulierung gemäß Beispiel 8 wird in einen Autoreifen mit einem Pinsel aufgestrichen. Nach Zutritt von Wasser zeigt die Blaufärbung eine Freisetzung des Wirkstoffs an.

### Beispiel 10:

Eine Wasser-in-Öl-Polymerdispersion gemäß Beispiel 1 (ohne Wirkstoff) wird mit verschiedenen Mengen an Triadimenol® (systemisches Fungizid) versetzt. Die Wirkstoffzubereitung wird mit einer konventionellen Saatgutbeschichtungsanlage (Fa. Hege) auf Weizen (Kanzler) aufgebracht. Das Verhältnis von Saatgut zur erfindungsgemäßen Komposition betrug 100:1. Der so behandelte Weizen wurde im Gewächshaus angezogen. Nachdem die Weizenhalme eine Höhe von ca. 10 cm erreicht hatten, wurden die Halme mit Phytophora infestans geimpft, der Schädlingsbefall wurde nach einer, bzw. nach 2,5 Wochen gemäß der ABBOTT-Skala gemessen.

Bei allen, mit der Wirkstoffzubereitung behandelten Weizenkörnern war ein deutlich besseres Auflaufen der Versuchspflanzen zu beobachten, als bei konventionell behandelten (gebeizten) Weizenkörnern.

Die Tabelle gibt den Wirkungsgrad (Abbott) der Proben wieder:

| Beispiel | Triadimenol | W-i-ö-Dispersionen | Wirkungsgrad | Wirkungsgrad |
|---|---|---|---|---|
| | (ppm/Weizen) | (%) | (Abbott,%, 1 Woche) | (Abbott,%, 2,5 Wochen) |
| 10a | 3000 | 1 | 100 | 89 |
| 10b | 2000 | 1 | 100 | 80 |
| 10c | 1000 | 1 | 100 | 77 |
| 10d | 600 | 1 | 92 | 68 |
| 10e | 300 | 1 | 84 | 52 |
| 10f | 100 | 1 | 47 | 36 |
| 10g | 30 | 1 | 23 | 17 |
| 10h | 10 | 1 | 10 | 0 |
| 10i | 3 | 1 | 0 | 0 |
| 10k | 1 | 1 | 0 | 0 |
| 10l | 0 | 1 | 0 | 0 |
| 10m | 300 | 0 | 48 | 39 |
| 10l, 10m: Kontrollexperimente | | | | |

Die Beispiele zeigen, daß eine konventionelle Beizung (10m) etwa dieselbe Effektivität hat, wie eine Wirkstoffbeizung mit deutlich weniger Aktivstoff (10f). Außerdem konnte durch die Experimente belegt werden, daß die Phytotoxizität durch die erfindungsgemäße Komposition deutlich vermindert wurde. Alle erfindungsgemäßen Beispiele zeigen ein besseres Auflaufen des Weizens als die Probe mit der konventionellen Beizung (10m).

### Beispiel 11:

Eine Formulierung gemäß Beispiel 9 wird mit Erde (humusreiche Erde) gemischt. Nach Zutritt von Wasser zeigt die Blaufärbung die Freisetzung des Wirkstoffs an.

### Beispiel 12:

Eine Formulierung gemäß Beispiel 9 wird mittels eines Sprühkopfs (handelsübliches Sprühgerät für das Besprühen von DC-Platten) auf einen feuchten Ast aufgesprüht. Mit dem Zutritt der Feuchtigkeit verdickt die Wirkstofflösung sofort, die Wirkstofflösung bleibt am Ast haften.

### Beispiel 13:

Beispiel 11 wird wiederholt, allerdings wird ein trockener Ast benutzt. Gleichzeitig wird mit der erfindungsgemäßen Komposition Wasser auf den Ast gesprüht. Die Wirkstofflösung und das Wasser bilden eine Gelschicht, die am Ast haften bleibt.

### Beispiel 14:

Einige Tropfen der Wirkstofflösung gemäß Beispiel 4 werden in ein Becken (Wasserinhalt ca. 2,5 I) gegeben, die Tropfen verdicken und bilden Gelpartikel, aus denen das Methopren® langsam freigesetzt wird.

## Patentansprüche

1. Wirkstoffhaltige Komposition enthaltend:
I. eine Wasser-in-Öl-Polymerdispersion bestehend aus einer kontinuierlichen, mit Wasser praktisch nicht mischbaren organischen Phase, darin fein verteilten, wasserquellbaren Polymerisaten, die vorzugsweise auch wasserlöslich sind und gegebenenfalls Hilfsstoffen und
II. mindestens eine biologisch aktive am Polymerisat fixierte Substanz als Wirkstoff.

2. Wirkstoffhaltige Komposition nach Anspruch 1, **dadurch gekennzeichnet, daß** sie aus:
A) 20 bis 60 Gew.-% Polymerisat, vorzugsweise Homo- undloder Copolymeren von monoethylenisch, ungesättigten Monomeren, vorzugsweise Acrylsäure, Methacrylsäure, Maleinsäure, Itaconsäure und 2-Acrylamido-2-methylpropan-sulfonsäure und den Salzen dieser Monomeren sowie Acrylamid und Hydroxyalkylacrylaten und Hydroxyalkylmethacrylaten,
B) 20 bis 50 Gew.-% mit Wasser praktisch nicht mischbarer, hydrophober organischer Flüssigkeit,
C) 0,5 bis 10 Gew.-% Wasser-in-Öl-Emulgator,
D) gegebenenfalls 0,5 bis 10 Gew.-% eines Netzmittels,
E) 0,5 bis 50 Gew.-% Wirkstoff und
F) Rest auf 100 Gew.-% Wasser
besteht.

3. Wirkstoffhaltige Komposition nach einem der Ansprüche 1 - 2, **dadurch gekennzeichnet, daß** der Wirkstoff ein systemischer Wirkstoff ist.

4. Wirkstoffhaltige Komposition nach einem der Ansprüche 1 - 2, **dadurch gekennzeichnet, daß** der Wirkstoff ein nicht systemischer Wirkstoff ist.

5. Wirkstoffhaltige Komposition nach einem der Ansprüche 1 - 4, **dadurch gekennzeichnet, daß** als Wirkstoff ein Biozid, vorzugsweise ein Akarzid, ein Bakterizid, ein Fungizid, ein Herbizid, ein Insektizid, ein Larvizid, ein Molltuskizid, ein Nematizid, ein Rodentizid, ein Virizid, ein Hemmstoff oder ein Wuchsstoff, ein Dungemittel, ein resistenzsteigerndes Mittel, ein Repellent und/oder ein Geruchsstoff vorliegt.

6. Wirkstoffhaltige Komposition nach einem der Ansprüche 1 - 5, **dadurch gekennzeichnet, daß** die Ölphase ganz oder teilweise aus dem Wirkstoff besteht.

7. Wirkstoffhaltlge Komposition nach Anspruch 6, **dadurch gekennzeichnet, daß** der Anteil des Wirkstoffs an der Ölphase maximal 50 Gew.-%, vorzugsweise maximal 25 Gew.-% beträgt.

8. Wirkstoffhaltige Komposition nach einem der Ansprüche 1 - 5 , **dadurch gekennzeichnet, daß** der Anteil des Wirkstoffs an der wäßrigen Phase maximal 60 Gew.-%, vorzugsweise maximal 40 Gew.-%, ganz besonders bevorzugt maximal 25 Gew.-% beträgt.

9. Wirkstoffhaltige Komposition nach einem der Ansprüche 1 - 8, **dadurch gekennzeichnet, daß** mehrere Wirkstoffe eingesetzt werden.

10. Wirkstoffhaltige Komposition nach Anspruch 1 - 9 **dadurch gekennzeichnet, daß** sie mit Wasser zu einer viskosen Lösung oder Dispersion verdünnbar ist.

11. Wirkstoffhaltige Komposition nach einem der Ansprüche 1 - 10, **dadurch gekennzeichnet, daß** der/die Wirkstoff(e) stabilisiert ist (sind).

12. Wirkstoffhaltige Komposition nach einem der Ansprüche 1 - 11, **dadurch gekennzeichnet, daß** die Ölphase zumindest teilweise aus mindestens einem aromatischen Lösemittel und/oder aus mindestens einem Fettsäurealkylester, vorzugsweise Ölsäuremethylester, besteht.

13. Verfahren zur Herstellung der wirkstoffhaltigen Komposition nach einem der Ansprüche 1 -12, **dadurch gekennzeichnet, daß** mindestens ein Wirkstoff vor, während oder nach der Polymerisation der Wasser-in-Öl-Polymerdispersion zugegeben wird.

14. Verfahren zur Herstellung der wirkstoffhaltigen Komposition nach einem der Ansprüche 1 - 12, **dadurch gekennzeichnet, daß** mehrere Wirkstoffe zugesetzt werden, wobei jeder Wirkstoff getrennt, gegebenenfalls bei verschiedenen Herstellungsschritten der Wasser-in-Öl-Polymerdispersion oder in Mischung mit anderen Wirkstoffen, zugesetzt wird.

15. Verwendung der wirkstoffhaltigen Kompositionen nach einem der Ansprüche 1 - 12 zum Ausbringen von Wirkstoffen auf und/oder in Substrate.

16. Verwendung nach Anspruch 15 in der Landwirtschaft, beim Pflanzen- und Obstanbau, bei der Pflanzenzucht, bei der Lagerung oder Verarbeitung von Früchten und Fetdfrüchten oder pflanzlichen Materialien.

17. Verwendung nach Anspruch 15 zur Behandlung von Insektenbrutstätten.

18. Verwendung nach Anspruch 17, **dadurch gekennzeichnet, daß** Wasserbehältnisse, vorzugsweise Kondenswasserbecken in Klimaanlagen oder Autoreifen bzw. Altreifen behandelt werden.

19. Verwendung nach einem der Ansprüche 15 - 18 als Sprühflüssigkeit.

20. Verwendung nach Anspruch 15 als Saatgutbeize.

21. Verwendung nach einem der Ansprüche 15 - 20 zur Verminderung von Run OFF-Effekten oder Leaching-Effekten.

22. Verwendung nach einem der Ansprüche 15 - 21 zur kontrollierten Freisetzung von Wirkstoffen.

## Claims

1. Active substance composition containing:
I. a water-in-oil polymer dispersion consisting of a continuous organic phase virtually immiscible with water, water-swellable addition polymers which are preferably water soluble as well finely dispersed therein, and optionally, auxiliaries, and
II. at least one biologically active substance fixed to the addition polymer.

2. Active substance composition according to Claim 1, **characterized in that** it consists of:
A) 20 to 60% by weight of addition polymer, preferably homo- and/or copolymers of monoethylenically unsaturated monomers, preferably acrylic acid, methacrylic acid, maleic acid, itaconic acid and 2-acrylamido-2-methylpropanesulphonic acid and the salts of these monomers and also acrylamide and hydroxyalkyl acrylates and hydroxyalkyl methacrylates,
B) 20 to 50% by weight of hydrophobic organic liquid virtually immiscible with water,
C) 0.5 to 10% by weight of water-in-oil emulsifier,
D) optionally 0.5 to 10% by weight of a wetting agent,
E) 0.5 to 50% by weight of active substance, and
F) water to make 100% by weight.

3. Active substance composition according to either of Claims 1-2, **characterized in that** the active substance is a systemic active substance.

4. Active substance composition according to either of Claims 1-2, **characterized in that** the active substance is a non-systemic active substance.

5. Active substance composition according to any one of Claims 1-4, **characterized in that** the active substance is a biocide, preferably an acaricide, a bactericide, a fungicide, a herbicide, an insecticide, a larvicide, a molluscicide, a nematicide, a rodenticide, a viricide, an inhibitor or a growth substance, a fertilizer, a resistance-increasing agent, a repellent and/or an odorant.

6. Active substance composition according to any one of Claims 1-5, **characterized in that** the oil phase consists wholly or partly of the active substance.

7. Active substance composition according to Claim 6, **characterized in that** the fraction of the oil phase which is attributable to the active substance is not more than 50% by weight and preferably not more than 25% by weight.

8. Active substance composition according to any one of Claims 1-5, **characterized in that** the fraction of the aqueous phase which is attributable to the active ingredient is not more than 60% by weight, preferably not more than 40% by weight and most preferably not more than 25% by weight.

9. Active substance composition according to any one of Claims 1-8, **characterized in that** a plurality of active substances are used.

10. Active substance composition according to Claim 1-9 **characterized in that** it is thinnable with water to form a viscous solution or dispersion.

11. Active substance composition according to any one of Claims 1-10, **characterized in that** the active substance or substances is or are stabilized.

12. Active substance composition according to any one of Claims 1-11, **characterized in that** the oil phase consists at least partly of at least one aromatic solvent and/or of at least one fatty acid alkyl ester, preferably methyl oleate.

13. Process for producing the active substance composition according to any one of Claims 1-12, **characterized in that** at least one active substance is added before, during or after the polymerization of the water-in-oil polymer dispersion.

14. Process for producing the active substance composition according to any one of Claims 1-12, **characterized in that** a plurality of active substances are added, each active substance being added separately, optionally in the course of various production steps of the water-in-oil polymer dispersion or in mixture with other active substances.

15. Use of the active substance compositions according to any one of Claims 1-12 for placing active substances on and/or in substrates.

16. Use according to Claim 15 in agriculture, in plant and fruit cultivation, in plant breeding, in storing or processing fruits and field crops or vegetable materials.

17. Use according to Claim 15 for treating insect-breeding grounds.

18. Use according to Claim 17, **characterized in that** water receptacles, preferably condensation water tanks in air conditioners or car tyres or waste tyres are treated.

19. Use according to any one of Claims 15-18 as a spray.

20. Use according to Claim 15 as a seed dressing.

21. Use according to any one of Claims 15-20 for reducing runoff effects or leaching effects.

22. Use according to any one of Claims 15-21 for controlled release of active substances.

## Revendications

1. Composition contenant des substances actives, contenant
I. une dispersion polymère eau dans huile constituée d'une phase organique continue, pratiquement non miscible avec l'eau et dans celle-ci des polymères finement divisés, gonflables à l'eau qui sont de préférence également solubles dans l'eau et le cas échéant des adjuvants et
II. au moins une substance biologiquement active fixée au polymère comme substance active.

2. Composition contenant des substances actives selon la revendication 1, **caractérisée en ce qu'**elle est constituée de
A) 20 à 60% en poids de polymère, de préférence des homopolymères et/ou des copolymères de monomères insaturés monoéthyléniques, de préférence l'acide acrylique, l'acide méthacrylique, l'acide maléique, l'acide itaconique et l'acide 2-acrylamido-2-méthylpropanesulfonique et les sels de ces monomères ainsi que l'acrylamide et des hydroxyalkylacrylates et des hydroxyalkylméthacrylates,
B) 20 à 50% en poids de liquide organique, hydrophobe, pratiquement non miscible avec l'eau,
C) 0,5 à 10% en poids d'émulsifiant eau dans huile,
D) le cas échéant 0,5 à 10% en poids d'un mouillant,
E) 0,5 à 50% en poids de substance active et
F) pour le reste de l'eau jusqu'à 100% en poids.

3. Composition contenant des substances actives selon l'une quelconque des revendications 1 et 2, **caractérisée en ce que** la substance active est une substance active systémique.

4. Composition contenant des substances actives selon l'une quelconque des revendications 1 et 2, **caractérisée en ce que** la substance active est une substance active non systémique.

5. Composition contenant des substances actives selon l'une quelconque des revendications 1 à 4, **caractérisée en ce que** la substance active est un biocide, de préférence un acaricide, un bactéricide, un fongicide, un herbicide, un insecticide, un larvicide, un molluscicide, un nématicide, un rodenticide, un virocide, une substance inhibitrice ou une substance de croissance, un engrais, un agent d'augmentation de la résistance, un répulsif et/ou un parfum.

6. Composition contenant des substances actives selon l'une quelconque des revendications 1 à 5, **caractérisée en ce que** la phase huileuse est constituée totalement ou partiellement de la substance active.

7. Composition contenant des substances actives selon la revendication 6, **caractérisée en ce que** la proportion de substance active dans la phase huileuse est d'au maximum 50% en poids, de préférence d'au maximum 25% en poids.

8. Composition contenant des substances actives selon l'une quelconque des revendications 1 à 5, **caractérisée en ce que** la proportion de substance active dans la phase aqueuse est d'au maximum 60% en poids, de préférence d'au maximum 40% en poids, de manière tout particulièrement préférée d'au maximum 25% en poids.

9. Composition contenant des substances actives selon l'une quelconque des revendications 1 à 8, **caractérisée en ce que** plusieurs substances actives sont utilisées.

10. Composition contenant des substances actives selon les revendications 1 à 9, **caractérisée en ce qu'**elle peut être diluée avec de l'eau en formant une solution ou une dispersion visqueuse.

11. Composition contenant des substances actives selon l'une quelconque des revendications 1 à 10, **caractérisée en ce que** la ou les substance(s) active(s) est (sont) stabilisée(s).

12. Composition contenant des substances actives selon l'une quelconque des revendications 1 à 11, **caractérisée en ce que** la phase huileuse est constituée au moins partiellement d'au moins un solvant aromatique et/ou d'au moins un ester alkylique d'acide gras, de préférence l'ester méthylique de l'acide oléique.

13. Procédé pour la préparation de la composition contenant des substances actives selon l'une quelconque des revendications 1 à 12, **caractérisé en ce qu'**on ajoute au moins une substance active avant, pendant ou après la polymérisation de la dispersion polymère eau dans huile.

14. Procédé pour la préparation de la composition contenant des substances actives selon l'une quelconque des revendications 1 à 12, **caractérisé en ce qu'**on ajoute plusieurs substances actives, chaque substance active étant ajoutée séparément, le cas échéant lors de différentes étapes de préparation de la dispersion polymère eau dans huile ou en mélange avec d'autres substances actives.

15. Utilisation des compositions contenant des substances actives selon l'une quelconque des revendications 1 à 12 pour l'application de substances actives sur et/ou dans des substrats.

16. Utilisation selon la revendication 15 dans l'agriculture, lors de la culture de plantes et de fruits, lors de la croissance de plantes, lors de l'entreposage ou le traitement de fruits et de produits agricoles ou de matériaux végétaux.

17. Utilisation selon la revendication 15 pour le traitement de nids d'insectes.

18. Utilisation selon la revendication 17 **caractérisée en ce qu'**on traite des récipients à eau, de préférence des bassins de condensation dans des installations de climatisation, ou des pneumatiques de voiture ou, selon le cas, des pneumatiques usés.

19. Utilisation selon l'une quelconque des revendications 15 à 18 comme liquide de pulvérisation.

20. Utilisation selon la revendication 15 comme désinfectant de semences.

21. Utilisation selon l'une quelconque des revendications 15 à 20 pour diminuer les effets d'écoulement ou de lessivage.

22. Utilisation selon l'une quelconque des revendications 15 à 21 pour la libération contrôlée de substances actives.
